(19) Europäisches Patentamt
European Patent Office
Office européen des brevets

(11) **EP 3 154 359 B1**

(12) **EUROPEAN PATENT SPECIFICATION**

(45) Date of publication and mention
of the grant of the patent:
**21.03.2018 Bulletin 2018/12**

(21) Application number: **15725378.2**

(22) Date of filing: **02.06.2015**

(51) Int Cl.:
*A23C 9/152* (2006.01)    *A23C 9/154* (2006.01)
*A23C 9/156* (2006.01)    *A23L 2/52* (2006.01)
*A23L 5/00* (2016.01)    *A23C 3/05* (2006.01)
*A23C 9/15* (2006.01)

(86) International application number:
**PCT/EP2015/062243**

(87) International publication number:
**WO 2015/185545 (10.12.2015 Gazette 2015/49)**

(54) **PACKAGED DAIRY BEVERAGE**

VERPACKTES MILCHGETRÄNK

BOISSON LAITIÈRE EMBALLÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.06.2014 EP 14170850**

(43) Date of publication of application:
**19.04.2017 Bulletin 2017/16**

(73) Proprietor: **Nestec S.A.**
**1800 Vevey (CH)**

(72) Inventors:
• **CLAVIER MANRIQUE, Luis**
**CH-1006 Lausanne (CH)**

• **DELATTRE, Jean-Marie**
**F-14100 Beuvillers (FR)**
• **GUEZET, Christine**
**F-14200 Hérouville-Saint-Clair (FR)**
• **REY-GARCIA, Muriele**
**F-14700 Falaise (FR)**

(74) Representative: **Cogniat, Eric Jean Marie**
**Nestec S.A.**
**Centre de Recherche Nestlé**
**Vers-chez-les-Blanc**
**Case Postale 44**
**1000 Lausanne 26 (CH)**

(56) References cited:
EP-A1- 1 226 761    EP-A1- 1 362 799
JP-A- S6 087 775    US-A1- 2011 020 512

**Description**

## TECHNICAL FIELD

The invention relates to a packaged dairy beverage, specifically a chilled dairy beverage which may exhibit a stable and smooth foam after shaking by hand.

## BACKGROUND OF THE INVENTION

Any discussion of the prior art in the specification should in no way be considered as an admission that such prior art is widely known or forms part of common general knowledge in the field.

Milk-based beverages are popular drinks amongst the consumers, because they are viewed as healthier alternatives to sparkling sodas, with nutritious properties thanks to their protein and minerals contents, and with a good acceptance by consumers who find water too bland.

Foamy beverages are appreciated for their light and refreshing texture. However, this depends strongly on the foam properties, such as bubble size and distribution, origin of the bubbles, for instance by gasification with carbonic gas, or by fermentation with yeasts which generate carbonic gas.

US 2011/0020512 relates to a method for enhancing a foam retention property of a beverage, which involves the use of a fermentation-derived cellulose as a raw material of the beverage, in a state of complex with a high molecular substance.

Over the recent years, Nestec S.A. has filed several patent applications relating to ready-to-drink dairy-based beverage which are shelf-stable at ambient temperatures, for instance during 3 months at temperatures ranging from 15°C to 35°C. In order to avoid biological spoilage, such beverages undergo heat treatments which have a strong impact on stability, and may provoke gelation, syneresis and other undesirable physical evolution over shelf life. Specific stabiliser mixes have been developed in order to avoid or mitigate such physical evolution. These beverages are not foamy.

The inventors have found that there exist several coffee-flavoured milk beverages. However, these beverages have either a very watery mouth-feel, or have a very thick texture. Watery beverages do not bring the satisfaction of a milk drink, while thick beverages are not perceived as very refreshing or as thirst quenching. In addition, these milk beverages are not foamable upon shaking.

The inventors have found it desirable to overcome or ameliorate at least one of the disadvantages of the prior art, or to provide a useful alternative. In particular, the inventors have set themselves to create a pleasant foamy dairy beverage.

## SUMMARY OF THE INVENTION

To this end, a first embodiment of the invention proposes a packaged product consisting essentially of a chilled dairy beverage in a closed cup, wherein said beverage comprises from 2.5 to 4.5 wt% of milk proteins, from 1.5 to 5 wt% of milk fat, from 3 to 7 wt% of added sugar, from 0.05 to 0.2 wt% of xanthan gum, from 0.4 to 0.7 wt% of a blend of cellulose and carboxy-methylcellulose, from 0.01 to 0.05 wt% of carrageenan, and the remainder to 100 wt% of water; wherein said beverage has a Brookfield viscosity of 150 to 490 mPa.s (spindle No 2, 50 rpm, 8°C); wherein the headspace represents from 18 to 26 vol.% of the volume of the cup; and wherein added sugar are caloric mono- and di-saccharides not naturally found in the dairy component.

In a second embodiment, the invention proposes a process for preparing a foamy chilled dairy beverage which comprises the step of 1) providing a packaged product according to the first embodiment of the invention, wherein said packaged product consists essentially of a chilled dairy beverage in a closed cup, then 2) shaking said packaged product to obtain said foamy chilled dairy beverage.

In a third embodiment, the invention proposes the use of a packaged product according to the first embodiment of the invention, for preparing a foamy chilled dairy beverage by shaking, wherein said packaged product consists essentially of a chilled dairy beverage in a closed cup.

These and other aspects, features and advantages of the invention will become more apparent to those skilled in the art from the detailed description of embodiments of the invention, in connection with the attached drawings.

## BRIEF DESCRIPTION OF THE DRAWINGS

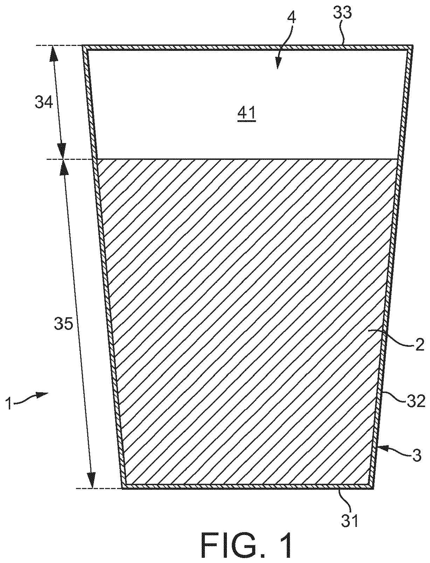

Figure 1 shows a chilled dairy beverage in a closed cup.

**DETAILED DESCRIPTION OF THE INVENTION**

As used in the specification, the word "comprising" is to be construed in an inclusive sense, that is to say, in the sense of "including, but not limited to", or "containing, but not limited to", as opposed to an exclusive or exhaustive sense. On the contrary, the words "consisting of" are to be construed in an exclusive sense, that is to say in the sense of "limited to" except for impurities ordinarily associated with an ingredient for instance. The words "consisting essentially of" limit the scope of a claim to the specified materials or steps, and those that do not materially affect the basic and novel characteristic(s) of the claimed invention.

As used in the specification, the word "about" should be understood to apply to each bound in a range of numerals. Moreover, all numerical ranges should be understood to include each whole integer within the range.

As used in the specification, the singular forms "a", "an", and "the" include plural referents unless the context clearly dictates otherwise.

Unless noted otherwise, all percentages in the specification refer to weight percent (noted wt%).

Unless defined otherwise, all technical and scientific terms have and should be given the same meaning as commonly understood by one of ordinary skill in the art to which this invention belongs, that of chilled dairy beverages.

As shown on figure 1, an embodiment of the invention relates to a packaged product 1 which consists essentially of a chilled dairy beverage 2 in a closed cup 3. The volume of the cup 3 is split between the beverage 2 and a headspace 4. The beverage is suitable for preparing a foamy beverage by shaking it in the closed cup. The consumer can then open the cup to drink the foamy beverage.

Throughout the specification, "chilled beverage" refers to a beverage which must be stored at a refrigerated temperature over its shelf life. Refrigerated temperatures range from above 0°C to 6°C. "Shelf life" refers to the period of time after production of the beverage, during which the beverage is transported, and stored in retailers' or consumers' shelves, before consumption.

The chilled dairy beverage ("the beverage") comprises a dairy component, a flavour component, a texture component, and water.

The dairy component provides the nutritional benefits of milk. The dairy component can include one or more dairy ingredients or dairy substitute ingredients. For example, the dairy ingredients can be milk, milk fat, milk powder, skim milk, milk proteins, cream, and combinations thereof. Examples of suitable milk proteins are casein, caseinate, casein hydrolysate, whey, whey hydrolysate, whey concentrate, whey isolate, milk protein concentrate, milk protein isolate, and combinations thereof. Furthermore, the milk protein may be, for example, sweet whey, acid whey, $\alpha$-lactalbumin, $\beta$-lactoglobulin, bovine serum albumin, acid casein, caseinates, $\alpha$-casein, $\beta$-casein, and/or $\gamma$-casein. Suitable dairy substitute ingredients include soy proteins, rice proteins and combinations thereof, for example. In a preferred embodiment, the beverage does not contain dairy substitute ingredients. In an embodiment, the beverage comprises at least one of skim milk, whole pasteurized milk, skim milk powder, and cream. Preferably, the beverage comprises skim milk, cream and skim milk powder. In a preferred embodiment, the beverage does not contain added oil.

In an embodiment, the beverage comprises less than 5 wt% of milk fat, such as from 1.5 to 5 wt% of milk fat, preferably from 1.5 to 4 wt% of milk fat, and more preferably from 2 to 3.5 wt% of milk fat, such as 2.2 wt%, 2.5 wt%, 2.8 wt%, or 3 wt% of milk fat. In an embodiment, the fat content of the beverage is low enough so that the beverage could be considered as a skim milk beverage.

In an embodiment, the beverage comprises from 2.5 to 4.5 wt% of milk proteins, preferably from 3 to 4.2 wt% of milk proteins, and more preferably from 3.5 to 4 wt% of milk proteins. Milk proteins have an impact on foamability and foam stability. Preferably, the proteins in the beverage are milk proteins only.

The flavour component provides flavour to the beverage, in addition to the milk flavour which comes from the dairy component. The flavour component comprises a sweetener, such as sugar (sucrose) or a non-caloric sweetener. For instance, the beverage comprises from 3 to 7 wt% of added sugar. In an embodiment, the beverage has a "low sugar" content, meaning that it contains less than 4.5 g of added sugar per 100 g of the beverage. "Added sugar" refers to caloric mono- and di-saccharides added during manufacture of the beverage, such as glucose, sucrose, maltose, fructose, which are not naturally found in the dairy component. For instance, lactose is naturally found in milk, therefore, for the purpose of this disclosure, lactose is not taken into account in "added sugar".

In addition to the sweetener, the flavour component comprises a flavour ingredient selected from coffee, cocoa, tea, caramel, vanilla, cinnamon, cardamom, saffron, clove, and mixtures thereof. In a preferred embodiment, the beverage comprises a coffee component, such as coffee extract. Coffee extract may be provided as liquid or pasty coffee concentrate, or as instant powdered coffee, such as spray-dried powdered coffee or freeze-dried powdered coffee. Preferably, the beverage comprises from 0.8 to 1.5 wt% of coffee component, such as instant powdered coffee. In an embodiment, the flavour component is decaffeinated coffee.

The texture component provides mouth-feel and viscosity, and helps maintaining the foamy texture of the beverage after shaking. The texture component comprises xanthan gum, a blend of cellulose and carboxy-methylcellulose, and carrageenan. More specifically, the beverage comprises from 0.1 to 0.2 wt% of xanthan gum, from 0.4 to 0.7 wt% of a blend of cellulose and carboxy-methylcellulose, from 0.01 to 0.05 wt% of carrageenan. The beverage has a Brookfield viscosity of 150 to 490 mPa.s when measure with a Brookfield rheometer/viscometer, using spindle No 2, at a rotation speed of 50 rpm, at 8°C.

In addition, the beverage may comprise an acidity regulator, such as sodium hydroxide. In an embodiment, the beverage comprises from 0.04 to 0.09 wt% of an acidity regulator.

In an embodiment, the chilled dairy beverage contains from 18 to 25 wt% of total solids, preferably from 19 to 22 wt% total solids. The total solids content is involved in the overall mouth feel and viscosity of the beverage.

The chilled dairy beverage is manufactured by providing a standardised liquid milk composition, which comprises from 1.5 to 5 wt% of milk fat, and from 2.5 to 4.5 wt% of milk proteins. The mix composition may be prepared by mixing liquid skim milk, milk cream and skimmed milk powder. Flavour components, such as sugar and a coffee component, and texture component, are also mixed into the liquid mix composition. For instance, mixing is done at 10°C, during 60 minutes. Then, the pH of the mix may be adjusted with an acidity regulator, such as sodium hydroxide. The pH is adjusted to a value of 6.5 to 7.0. The liquid milk composition is then pre-heated prior to sterilisation typically at 140°C for 4 seconds. Sterilisation removes biological contamination from the milk composition. Alternative heat-treatments are known to the person of ordinary skill in the art. Then the sterilised liquid milk composition is cooled to about 75°C prior to homogenisation under a typical pressure of 150 bar in a conventional homogeniser. Homogenisation further disperses the fat component and other ingredients. Then the milk composition is cooled to refrigerated temperatures, and filled into cups. Filling is done under ultra-clean conditions. In an embodiment, filling may be done aseptically. In an embodiment, filling is performed under a controlled atmosphere, to flush oxygen out of the headspace. For instance, controlled atmosphere is a nitrogen atmosphere. The cups are then sealed.

Maintaining a foamed texture over shelf life requires the use of relatively high amounts of additives to stabilise the foam. However, additives are not always accepted by consumers. Also, the mouth-feel of shelf-stable foamed beverage may be less pleasant than that of a freshly prepared foamy beverage. Rather than ensuring that the beverage retains a foamy texture over the whole shelf life, the inventors have reversed the problem and now provide a non-foamy beverage which retains a pleasant foamy texture during consumption. As mentioned, the foamy texture is obtained by shaking the beverage in its closed cup, for instance by hand. Shaking by hand may be done by holding the cup in the hand, and bending and stretching the arms several times, for instance from 5 to 15 times. Generally, about 8 to 10 movements are sufficient to generate a pleasant foamy texture in the beverage.

An advantage is that it is not necessary to worry about shelf stability of the foamed beverage anymore. Only the shelf stability of the non-foamy beverage is a concern. In an embodiment, the beverage is shelf-stable during 28 days at 4°C, more preferably during 28 days at 6°C. In another embodiment, the beverage is shelf-stable during 30, 70, or 100 days at 6°C. A relatively long shelf stability may be achieved thanks to the ultra-clean manufacturing conditions, together with sterilisation, of the beverage. However, the beverage is not shelf-stable under ambient storage conditions, such as at temperatures greater than 18°C. The beverage must be stored under chilled condition to maximise its shelf life.

The cup 3 has a bottom wall 31, a side wall 32, and a lid 33. Shaking the beverage disperses the headspace gas 41 as bubbles into the beverage 2. The composition of the beverage, in particular the selection of hydrocolloids, was developed so that the bubbles remain distributed in the whole volume of the beverage during consumption, and to provide a pleasant mouth-feel. The fact that the bubbles are distributed in the whole volume of the beverage provides a pleasant foamy texture. For instance, the beverage retains a foamy texture during at least 10 minutes after shaking. Assessment of the foamy texture is performed by a trained sensory panel, as explained in the examples below. The maximum period during which bubbles are retained in the beverage is not absolutely critical, as the main criteria is that there are bubbles in the product until the consumer has completely drunk the beverage. Ordinarily, such beverages are consumed in less than 30 minutes. Preferably, the beverage retains a foamy texture during at least 15, 20, 25, or 30 minutes. The bubble distribution is not necessarily homogeneous throughout the whole volume of the beverage. Especially, due to coalescence and buoyancy of the bubbles, there may be more and bigger bubbles close to the surface of the beverage than at the bottom of the cup.

The inventors have found that if the headspace 4 is too small, then the closed cup 3 does not contain enough gas 41 to provide a pleasant foamy texture upon shaking. For instance, it was found that a headspace of 15 vol.% was too low to provide a pleasant foamy texture after shaking. Therefore, the headspace 4 represents preferably at least 18 % by volume (vol.%) of the volume of the cup.

On the other hand, if the headspace 4 is too large, it may have several undesirable consequences. First, the consumer could consider that the cup is not filled enough. Second, a large headspace can only be provided with a large cup. This increases the cost of packaging and the amount of waste. Third, the inventors have found that if the headspace is too large, then the cup tends to squash itself over shelf life. Without willing to be bound by theory, the inventors believe this is due to oxygen consumption. During shelf life, the oxygen in the headspace reacts with the beverage, especially when the beverage comprises a coffee component. This reduces the internal pressure in the headspace, thereby provoking a "vacuum" effect. For instance, cups with a headspace of 30°vol.% showed an unacceptable vacuum effect and squashing over shelf life. This could be solved by flushing the headspace with nitrogen for instance, during filling and sealing of the cup. However, this is an expensive technology. It was found that a good balance is achieved between these undesirable consequences, industrialisation considerations and the need to provide sufficient gas for foaming when the headspace represents up to 26 vol.% of the volume of the cup.

In an embodiment, the headspace represents from 18 to 26 vol.% of the volume of the cup. In other words, if the cup has a volume of 100 mL, then the headspace represents from 18 mL to 26 mL, and the remainder is the beverage (74 mL to 82 mL). Preferably, the headspace represents from 19 to 25 vol.% of the volume of the cup, more preferably, from 20 to 24 vol.% of the volume of the cup.

In addition, the thickness of the side wall 32 of the cup 3 may be greater in the upper or top part 34 of the cup 3 - where the headspace 4 is located - than in the lower or bottom part 35 of the cup 3 - where the beverage 2 is located - to strengthen the cup 3 against the vacuum effect. This also makes the cup easier to hold and shake, thanks to a greater resistance to squeezing by hand.

In an embodiment, the height of the cup 3 ranges from 90 to 150 mm and the volume of the cup ranges from 100 to 300 mL. The cup 3 contains one serving of beverage 2. For instance, one serving of beverage represents from 80 to 220 mL of beverage before shaking.

In another embodiment, the invention relates to a process for preparing a foamy chilled dairy beverage which comprises the steps of providing a packaged product as described above, then shaking the packaged product to obtain a foamy chilled dairy beverage. The foamy beverage is then ready for consumption. As mentioned, the foamy texture is obtained by shaking the beverage in its closed cup, for instance by hand. Shaking by hand may be done by holding the cup in the hand, and bending and stretching the arms several times, for instance from 5 to 15 times. Generally, about 8 to 10 movements are sufficient to generate a pleasant foamy texture in the beverage. When preparing the foamy beverage in that manner, an overrun of between 12 and 20% can be achieved, usually about 15 to 18%. As will be shown in the examples below, commercial products do not yield a significant overrun in similar shaking conditions.

The overrun is measured as follows: a volume V of the beverage is weighed before shaking (Wo). The product is shaken 10 times by hand. A volume V of the shaken beverage is also weighed (Wf). Overrun (in %) is the result of following equation:

$$Overrun = \frac{w_0 - w_f}{w_f} x100$$

where:

Wo = initial weight of the volume of beverage (non-aerated beverage)
Wf = final weight of the same volume of shaken beverage (aerated beverage)

**EXAMPLES**

**Example 1**

Several dairy beverages were prepared by mixing skim milk powder, milk cream into liquid skim milk, adding sugar and other flavour ingredients, texture components and sodium hydroxide as an acidity regulator. The mix was then pre-heated to 70°C, then sterilised at 140°C during 4 seconds, then cooled to 75°C prior to homogenisation under 150 bars. Then the liquid beverage was cooled to about 10°C, then filled into cups. The cups have a total volume of about 250 mL, and they are filled with 190 mL of dairy beverage. This leaves a headspace of about 60 mL, which corresponds to about 24 vol.%. The manufacture of the liquid dairy beverage was done under ultra clean conditions, at atmospheric pressure.

No squashing of the cups was observed during shelf life, ie during up to 70 days at 6°C. It was observed that the viscosity of the beverages increases slightly over shelf life, to a maximum of 490 mPa.s

The composition of the products is shown in the table below:

| Ingredient | Unit | Macchiato | Espresso | Cappuccino |
|---|---|---|---|---|
| Skimmed milk | wt% | to 100 | to 100 | to 100 |
| Cream (34% fat) | wt% | 9.90 | 5.90 | 7.90 |
| Skimmed milk powder | wt% | 3.10 | 3.10 | 3.10 |
| Sugar | wt% | 4.20 | 3.70 | 5.00 |

(continued)

| Ingredient | Unit | Macchiato | Espresso | Cappuccino |
|---|---|---|---|---|
| Coffee extract | wt% | 1.20 | 1.40 | 1.00 |
| Cocoa powder | wt% | | | 0.20 |
| Flavour (caramel) | wt% | | 0.50 | |
| Cellulose and carrageenan blend | wt% | 0.55 | 0.65 | 0.55 |
| Xanthan gum | wt% | 0.10 | 0.10 | 0.10 |
| NaOH (30% solution) | wt% | 0.08 | 0.08 | 0.08 |

The cellulose and carrageenan blend is a AVICEL PLUS CM2159. The xanthan gum is SATIAXANE CX91.

The beverage analysis is shown below:

| | Unit | Macchiato | Espresso | Cappuccino |
|---|---|---|---|---|
| Total solids | wt% | 20.4 | 19.7 | 20.6 |
| Milk fat | wt% | 3.5 | 2.2 | 2.8 |
| Milk protein | wt% | 3.9 | 3.9 | 3.9 |
| Viscosity * | mPa.s | 200 | 185 | 210 |
| * viscosity was measured at the beginning of shelf life. It was measured as explained in the specification above. | | | | |

## Example 2

The beverages of example 1 were compared with commercial chilled dairy beverages flavoured with coffee. An example of such a commercial beverage is EMMI's CAFFE LATTE. The comparison consisted in shaking the closed cups 10 times, then tasting the shaken beverages to assess the mouthfeel and the stability of the foam. The assessment was performed by a panel of trained people for texture assessment. The beverages were tasted immediately after shaking and every five minutes afterwards, for an overall period of 30 minutes.

The beverages of example 1 retained a pleasant foamy texture up to 30 minutes after shaking, whereas EMMI's CAFFE LATTE did not remain foamy after the first 5 minutes. Also, the bubbles quickly coalesced at the surface of the beverage.

The overrun of the shaken beverages was also measured. The beverages of example 1 exhibited an overrun of about 16% immediately after shaking, while EMMI's CAFFE LATTE only exhibited an overrun of about 1% immediately after shaking.

In conclusion, it was agreed that the beverages of example 1 have a pleasant foamy texture after shaking, which is retained during at least 30 minutes.

Although preferred embodiments have been disclosed in the description with reference to specific examples, it will be recognised that the invention is not limited to the preferred embodiments. Various modifications may become apparent to those of ordinary skill in the art and may be acquired from practice of the invention. It will be understood that the materials used and the chemical details may be slightly different or modified from the descriptions without departing from the methods and compositions disclosed and taught by the present invention.

Reference numbers on the drawing

1      packaged product
2      chilled dairy beverage
3      cup
31     bottom wall
32     side wall
33     lid

34    top part of the side wall
35    bottom part of the side wall
4     headspace
41    headspace gas

## Claims

1. A packaged product consisting essentially of a chilled dairy beverage in a closed cup, wherein said beverage comprises from 2.5 to 4.5 wt% of milk proteins, from 1.5 to 5 wt% of milk fat, from 3 to 7 wt% of added sugar, from 0.05 to 0.2 wt% of xanthan gum, from 0.4 to 0.7 wt% of a blend of cellulose and carboxy-methylcellulose, from 0.01 to 0.05 wt% of carrageenan, and the remainder to 100 wt% of water; wherein said beverage has a Brookfield viscosity of 150 to 490 mPa.s (spindle No 2, 50 rpm, 8°C); wherein the headspace represents from 18 to 26 vol.% of the volume of the cup; and wherein added sugar are caloric mono- and di-saccharides not naturally found in the dairy component.

2. The packaged product according to claim 1, wherein said beverage further comprises a flavour ingredient selected from coffee, cocoa, tea, caramel, vanilla, cinnamon, cardamom, saffron, clove, and mixtures thereof.

3. The packaged product according to claim 2, wherein said flavour ingredient comprises coffee extract.

4. The packaged product according to claim 2 or 3, which comprises from 0.8 to 1.5 wt% of coffee extract.

5. The packaged product according to any one of the preceding claims, wherein said beverage further comprises from 0.04 to 0.09 wt% of an acidity regulator.

6. The packaged product according to any one of the preceding claims, wherein said beverage is shelf-stable during 28 days at 6°C.

7. The packaged product according to any one of the preceding claims, wherein said beverage retains a foamy texture during at least 10 minutes after shaking.

8. The packaged product according to any one of the preceding claims, wherein the height of the cup ranges from 90 to 150 mm and the volume of the cup ranges from 100 to 300 mL.

9. The packaged product according to any one of the preceding claims, wherein the thickness of the side wall of the cup is greater in the upper part of the cup than in the lower part of the cup.

10. A process for preparing a foamy chilled dairy beverage which comprises the step of 1) providing a packaged product according to any one of the preceding claims, wherein said packaged product consists essentially of a chilled dairy beverage in a closed cup, then 2) shaking said packaged product to obtain said foamy chilled dairy beverage.

11. A process according to claim 10, wherein shaking is performed by hand.

12. A process according to claim 11, wherein shaking by hand is performed by shaking said closed cup from 5 to 15 times.

13. The use of a packaged product according to any one of claims 1 to 9, for preparing a foamy chilled dairy beverage by shaking, wherein said packaged product consists essentially of a chilled dairy beverage in a closed cup.

## Patentansprüche

1. Verpacktes Produkt, das im Wesentlichen aus einem gekühlten Milchgetränk in einem verschlossenen Becher besteht, wobei das Getränk zu 2,5 bis 4,5 Gew.-% Milchproteine, zu 1,5 bis 5 Gew.-% Milchfett, zu 3 bis 7 Gew.-% Zuckerzusatz, zu 0,05 bis 0,2 Gew.-% Xanthangummi, zu 0,4 bis 0,7 Gew.-% eine Mischung aus Zellulose und Carboxymethylzellulose, zu 0,01 bis 0,05 Gew.-% Carrageen und den Rest bis auf 100 Gew.-% Wasser umfasst; wobei das Getränk eine Brookfield-Viskosität von 150 bis 490 mPa.s (Spindel Nr. 2, 50 U/min, 8 °C); wobei der Kopfraum von 18 bis 26 Vol.% des Volumens des Bechers darstellt; und wobei der Zuckerzusatz kalorische Einfachzucker und Zweifachzucker sind, die in der Milchkomponente nicht natürlich vorkommen.

2. Verpacktes Produkt nach Anspruch 1, wobei das Getränk ferner einen Aromastoff ausgewählt aus Kaffee, Kakao, Tee, Karamell, Vanille, Zimt, Kardamom, Safran, Nelke und Mischungen davon umfasst.

3. Verpacktes Produkt nach Anspruch 2, wobei der Aromastoff Kaffeeextrakt umfasst.

4. Verpacktes Produkt nach Anspruch 2 oder 3, das zu 0,8 bis 1,5 Gew.-% Kaffeeextrakt umfasst.

5. Verpacktes Produkt nach einem der vorstehenden Ansprüche, wobei das Getränk ferner zu 0,04 bis 0,09 Gew.-% einen Säureregulator umfasst.

6. Verpacktes Produkt nach einem der vorstehenden Ansprüche, wobei das Getränk 28 Tage lang bei 6 °C haltbar ist.

7. Verpacktes Produkt nach einem der vorstehenden Ansprüche, wobei das Getränk mindestens 10 Minuten lang nach dem Schütteln eine schaumige Konsistenz beibehält.

8. Verpacktes Produkt nach einem der vorstehenden Ansprüche, wobei die Höhe des Bechers im Bereich von 90 bis 150 mm liegt und das Volumen des Bechers im Bereich von 100 bis 300 ml liegt.

9. Verpacktes Produkt nach einem der vorstehenden Ansprüche, wobei die Dicke der Seitenwand des Bechers im oberen Teil des Bechers größer ist als im unteren Teil des Bechers.

10. Verfahren zum Herstellen eines schaumigen gekühlten Milchgetränks, das den Schritt 1) des Bereitstellens eines verpackten Produkts nach einem der vorstehenden Ansprüche umfasst, wobei das verpackte Produkt im Wesentlichen aus einem gekühlten Milchgetränk in einem geschlossenen Becher besteht, und anschließend 2) das Schütteln des verpackten Produkts zum Erhalten des schaumigen gekühlten Milchgetränks.

11. Verfahren nach Anspruch 10, wobei das Schütteln per Hand erfolgt.

12. Verfahren nach Anspruch 11, wobei das Schütteln per Hand durch 5- bis 15-maliges Schütteln des geschlossenen Bechers erfolgt.

13. Gebrauch eines verpackten Produkts nach einem der Ansprüche 1 bis 9 zum Herstellen eines schaumigen gekühlten Milchgetränks durch Schütteln, wobei das verpackte Produkt im Wesentlichen aus einem gekühlten Milchgetränk in einem geschlossenen Becher besteht.

**Revendications**

1. Produit emballé consistant essentiellement en une boisson laitière refroidie dans un gobelet fermé, dans lequel ladite boisson comprend de 2,5 à 4,5 % en poids de protéines laitières, de 1,5 à 5 % en poids de matières grasses laitières, de 3 à 7 % en poids de sucre ajouté, de 0,05 à 0,2 % en poids de gomme de xanthane, de 0,4 à 0,7 % en poids d'un mélange de cellulose et de carboxyméthylcellulose, de 0,01 à 0,05 % en poids de carraghénane et le restant jusqu'à 100 % en poids d'eau ; dans lequel ladite boisson a une viscosité de Brookfield de 150 à 490 mPa.s (broche no. 2, 50 tr/min, 8 °C) ; dans lequel l'espace de tête représente de 18 à 26 % en volume du volume du gobelet ; et dans lequel le sucre ajouté sont des mono- et disaccharides caloriques qui ne se retrouvent pas naturellement dans le composant laitier.

2. Produit emballé selon la revendication 1, dans lequel ladite boisson comprend également un ingrédient de saveur choisi parmi le café, le cacao, le thé, le caramel, la vanille, la cannelle, la cardamome, le safran, le clou de girofle et des mélanges de ceux-ci.

3. Produit emballé selon la revendication 2, dans lequel ledit ingrédient de saveur comprend un extrait de café.

4. Produit emballé selon la revendication 2 ou 3, qui comprend de 0,8 à 1,5 % en poids de l'extrait de café.

5. Produit emballé selon l'une quelconque des revendications précédentes, dans lequel ladite boisson comprend également de 0,04 à 0,09 % en poids d'un régulateur d'acidité.

6. Produit emballé selon l'une quelconque des revendications précédentes, dans lequel ladite boisson a une durée de conservation de 28 jours à 6 °C.

7. Produit emballé selon l'une quelconque des revendications précédentes, dans lequel ladite boisson retient une texture mousseuse pendant au moins 10 min après agitation.

8. Produit emballé selon l'une quelconque des revendications précédentes, dans lequel la hauteur du gobelet va de 90 à 150 mm et le volume du gobelet va de 100 à 300 ml.

9. Produit emballé selon l'une quelconque des revendications précédentes, dans lequel l'épaisseur de la paroi latérale du gobelet est supérieure dans la partie supérieure du gobelet que dans la partie inférieure du gobelet.

10. Procédé de préparation d'une boisson laitière refroidie mousseuse qui comprend l'étape 1) de fourniture d'un produit emballé selon l'une quelconque des revendications précédentes, dans lequel ledit produit emballé consiste essentiellement en une boisson laitière refroidie dans un gobelet fermé, ensuite 2) d'agitation dudit produit emballé pour obtenir ladite boisson laitière refroidie mousseuse.

11. Procédé selon la revendication 10, dans lequel l'agitation est réalisée à la main.

12. Procédé selon la revendication 11, dans lequel l'agitation à la main est réalisée en secouant ledit gobelet fermé de 5 à 15 fois.

13. Utilisation d'un produit emballé selon l'une quelconque des revendications 1 à 9, pour la préparation d'une boisson laitière refroidie mousseuse par agitation, dans lequel ledit produit emballé consiste essentiellement en une boisson laitière refroidie dans un gobelet fermé.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110020512 A